# EUROPEAN PATENT APPLICATION

(11) **EP 4 847 357 A1**
(43) Date of publication of application: **02.12.2026**
(21) Application number: 26181840.5
(22) Date of filing: 29.05.2026
(51) Int. Cl.: B62H 1/02, B62H 1/04, B62H 1/06

(54) **ACTUATION SYSTEM FOR A STAND, PARTICULARLY FOR TWO-WHEELED VEHICLES**

(30) Priority: 29.05.2025 IT 202500012541
(71) Applicant: Candelo, Carolina, 16122 Genova (IT); Candelo, Isabella, 16011 Genova (IT)
(72) Inventor: Candelo, Carolina, 16122 Genova (IT); Candelo, Isabella, 16011 Genova (IT)
(74) Representative: Karaghiosoff, Giorgio Alessandro

(57) **Abstract**

System for actuating a motorized stand for a motor vehicle, wherein the stand comprises at least one leg, preferably a pair of legs, mounted to oscillate relative to a frame of the vehicle between a raised rest position and a lowered support position, said legs being actuatable by means of at least one rotation actuator and at least one length-adjustment actuator. Said system comprises a control unit configured to control the rotation actuator and the length-adjustment actuator as a function of signals coming from a plurality of sensors associated with the operating state of the motor vehicle, a plurality of sensors and in particular at least a sensor of the engine activation condition of the vehicle, a sensor of movement of at least one wheel of the vehicle, a sensor of actuation of at least one brake. In said system, the control unit is configured to enable the actuation of the stand exclusively when the following conditions are simultaneously satisfied: the engine of the vehicle is active, the wheels of the vehicle are stationary, at least one brake is actuated, and, in the absence of all the aforesaid conditions, the control unit is configured to prevent the activation of the stand.

## Description

### TEXT OF THE DESCRIPTION

The present invention relates to a system for actuating a stand, in particular for two-wheeled vehicles, such as mopeds or the like, preferably for motorcycles, scooters, bicycles, electric bicycles and the like.

In the state of the art, a motor-actuated stand is known in which the functions of the stand, namely the oscillation from the rest position to the lowered support position, which ensures the maintenance in equilibrium, in parking conditions, of vehicles provided with two wheels, as well as the telescopic lengthening and shortening of the arms carrying the support feet, are realized by means of an electro-hydraulic actuation system. The known stand systems are intended to allow the parking and stabilization of the vehicle under static conditions.

A contribution to the state of the art is represented by international application EP3326893A1 (WO2019/215474), relating to a motorized stand for motor vehicles comprising telescopic legs actuated by means of a hydraulic system and configured to pass from a rest position to an operating position according to a sequence comprising a rotation step and an extension step.

In that solution, a compensation system is furthermore provided, capable of adapting the extension of the legs of the stand as a function of the ground conditions, in order to keep the motor vehicle substantially in a vertical position even in the presence of non-horizontal surfaces.

Document WO2019/215474 is mainly directed to the management of the kinematics and of the compensation system of the stand and does not address the problem of the safe control of the activation of the stand as a function of the operating state of the motor vehicle. In particular, that document neither provides for nor suggests the use of enabling conditions based on a plurality of parameters representative of the operating safety of the vehicle, such as the state of the engine, the movement of the wheels, the actuation state of the brakes or the inclination of the motor vehicle, nor the implementation of a preventive control logic adapted to prevent the activation of the stand under potentially unstable or dangerous conditions. It follows that, although improving the mechanical and functional aspects of the stand, the solution documented in WO2019/215474 does not solve the problem of ensuring a safe control of the actuation of the stand as a function of the dynamic and static conditions of the motor vehicle.

A further example according to the state of the art is described in document US2005/0179229 (Ridley), which discloses a motorized stand associated with a control system capable of allowing or preventing the movement of the stand as a function of the state of the transmission of the vehicle. In particular, in that solution the activation of the stand is allowed exclusively when the transmission is in the neutral position ("neutral"), whereas otherwise the system is configured to automatically return the stand to the raised position and prevent its actuation.

That solution, however, has various limitations of a technical and functional nature.

In the first place, the system according to US2005/0179229 (Ridley) is based exclusively on a single safety condition, represented by the position of the transmission, and does not take into account further parameters relevant for the purposes of the stability of the vehicle, such as the actual movement of the wheels, the actuation of the brakes or the inclination of the motor vehicle.

Moreover, the control logic adopted in US2005/0179229 is of an essentially reactive type, since the system intervenes by imposing the retraction of the stand in the presence of non-allowed conditions, rather than preventing, upstream, the activation under potentially dangerous conditions.

A further significant limitation resides in the fact that the safety of the system is strictly linked to the presence of a "neutral" position in the transmission, making that solution little suited or ineffective for motor vehicles equipped with automatic transmissions, in particular continuously variable transmissions (CVT), in which the "neutral" condition is not directly usable as an operating control parameter.

A further contribution to the state of the art is represented by document US7,644,794 (Honda), relating to a transmission control system in which the position of the side stand is detected and used as a safety signal to prevent the engagement of the gear or to keep the transmission in the neutral condition when the stand is in the lowered position.

In that solution, the stand essentially constitutes a passive element, the state of which is used as an input for the control of the transmission of the vehicle, in order to avoid unsafe driving conditions.

This solution too, however, has significant limitations with respect to the technical problem that is the subject of the present invention.

In particular, the system according to US7,644,794 does not concern the active control of a motorized stand, but rather the control of the transmission of the vehicle and does not provide indications on how to safely manage the activation of a stand actuated by means of actuators.

Moreover, similarly to US2005/0179229, the solution according to US7,644,794 is implicitly based on the management of the state of the transmission (in particular the "neutral" condition), without addressing the problem of the definition of alternative safety conditions based on the dynamic behaviour of the vehicle.

In the light of the above, it is observed that the known solutions do not adequately address the problem of the safe control of complex motorized stands, in particular when such stands are equipped with actuators capable of modifying not only the position but also the support geometry of the vehicle, for example by varying the length of the support legs.

In such systems, in fact, the activation of the stand under inappropriate conditions may not only prove ineffective, but may also produce destabilizing effects, for example in the case where the motor vehicle has an excessive lateral inclination relative to the vertical, or is in a condition of residual movement or of failure to brake.

In particular, when the legs of the stand are equipped with actuators for adjusting the length in order to compensate for ground unevenness or inclinations of the support surface, that compensation function proves effective only within a certain range of inclination of the motor vehicle relative to the vertical orientation. Beyond that range, the action of the actuators may generate an opposite effect, contributing to increasing the inclination of the vehicle and resulting in a loss of stability with risk of lateral overturning.

Therefore, the technical need remains to provide a control system for a motorized stand that is capable of:
- ensuring the activation of the stand exclusively under safe operating conditions, taking into account a plurality of parameters representative of the actual state of the motor vehicle;
- operating effectively even in the absence of a transmission-in-neutral condition, for example in the case of automatic transmissions;
- preventing the activation of the stand under dynamic or geometric conditions that may compromise the stability of the vehicle;
- taking into account the functional limits of the actuators of the stand, in particular in relation to the capability of compensating for the inclination of the motor vehicle;
- optionally providing the user with information useful for returning the vehicle to conditions suitable for the activation of the stand.

The present invention aims to overcome at least one of the aforesaid limitations, providing a control system for a motorized stand that allows safe and reliable operation in a wide range of operating conditions.

An object of the present invention is to overcome the limitations of the known solutions, providing a system for actuating and controlling a motorized stand for motor vehicles that is capable of operating under conditions of high safety and reliability.

In particular, a first object of the invention is to provide a control system that allows the activation of the stand exclusively in the presence of a plurality of operating conditions adapted to ensure the stability of the motor vehicle, overcoming the approach of the known solutions based on a single condition, such as for example the state of the transmission.

A further object of the invention is to provide a system that is suitable for operating also in motor vehicles equipped with an automatic transmission, in particular a continuously variable one, in which a "neutral" condition usable as a safety parameter is not available, defining for this purpose alternative conditions based on the dynamic state of the motor vehicle, such as the absence of movement of the wheels and the actuation of the brakes.

A further object of the invention is to prevent the activation of the stand under unsafe dynamic conditions, by means of the use of sensors capable of detecting the movement, even minimal, of the motor vehicle, thus avoiding activations during transient phases of stopping or residual instability.

A further object of the invention is to take into account the geometric and static conditions of the motor vehicle relative to the vertical, preventing the activation of the stand when the lateral inclination exceeds an operating range within which the support system is able to ensure an effective stabilization.

In particular, according to a further object, the invention aims to allow the functional limits of the length-adjustment actuators of the legs of the stand to be considered, which actuators are designed to compensate for ground unevenness or inclinations within a certain range, avoiding operation under conditions in which such compensation may prove ineffective or even reversed, generating an effect of increasing the inclination and consequent destabilization of the motor vehicle.

A further object of the invention is to implement a control logic of a preventive type, in which the activation of the stand is allowed only following the verification of all the safety conditions, avoiding reactive behaviours that impose automatic movements of the stand under non-allowed conditions.

A further object of the invention is to provide a control architecture that allows, under exceptional conditions, such as for example situations of failure of the motor vehicle, the actuation of the stand by means of an emergency mode, which permits the bypassing of the control logics while maintaining operating safety.

Furthermore, an object of the invention is to improve the interaction between user and system, providing the possibility of supplying the user with indications relating to the state of the enabling or prevention conditions for the activation of the stand, so as to allow the user to intervene actively in order to return the motor vehicle to suitable operating conditions.

The subject of the present invention is therefore a system for actuating a motorized stand for a motor vehicle that allows one or more or all of the aforesaid objects to be satisfied simultaneously with one another.

In one embodiment, the invention provides a stand characterized by the combination of features of independent claim 1.

In this general embodiment, the stand comprises at least one leg, preferably a pair of legs, mounted to oscillate relative to a frame of the vehicle between a raised rest position and a lowered support position.

Said legs are actuatable by means of at least one rotation actuator and at least one length-adjustment actuator, so as to allow both the transition between the aforesaid positions and the adaptation of the support configuration of the stand.

The system furthermore comprises a control unit configured to control the rotation actuator and the length-adjustment actuator as a function of signals coming from a plurality of sensors associated with the operating state of the motor vehicle.

The plurality of sensors comprises at least:
- a sensor of the engine activation condition of the vehicle,
- a sensor of movement of at least one wheel of the vehicle,
- a sensor of actuation of at least one brake,

The control unit is configured to enable the actuation of the stand exclusively when the following conditions are simultaneously satisfied:
- the engine of the vehicle is active,
- the wheels of the vehicle are stationary,
- at least one brake is actuated,

In the absence of all the aforesaid conditions, the control unit is configured to prevent the activation of the stand.

According to a refinement, the aforesaid system for actuating a motorized stand for a motor vehicle provides that said plurality of sensors further comprises a sensor for measuring the lateral inclination of the motor vehicle, and said control unit is configured to enable the actuation of the stand exclusively when, simultaneously with the conditions listed above, the lateral-inclination control condition is also satisfied. Said control condition consists in verifying that the lateral inclination of the vehicle measured by said lateral-inclination sensor is lower than a predetermined threshold value, and, in the event that said condition is not satisfied, that is, the inclination of the motor vehicle measured by the sensor is greater than that defined in said threshold value, the control unit is configured to prevent the activation of the stand even in the absence of said lateral-inclination control condition, in combination with the verification that the aforesaid conditions are satisfied.

According to an embodiment, the system provides a control unit that is configured to evaluate the plurality of safety conditions by means of a combined logic such that the absence of one or more enabling signals entails the inhibition of the activation of the stand.

The invention provides further features and embodiments that may be provided in any combination with one another and/or with the features described above and that are the subject of the dependent claims.

By means of the system configuration features defined in claim 5, the safety condition for the actuation of the stand is defined independently of a transmission-in-neutral condition, said neutral condition being replaced by a combination of the conditions in which the system simultaneously detects the active-braking condition and the absence of movement of the wheels. This feature proves particularly advantageous when the system is provided in combination with motor vehicles equipped with an automatic transmission, in particular a continuously variable transmission (CVT), since a preventive enabling logic is realized, adapted to ensure the stability of the motor vehicle, independently of the presence of a transmission-in-neutral condition.

From the comparative analysis reported above it emerges that:
- WO2019/215474 is completely silent with regard to the problem of ensuring a safe control of the actuation of the stand as a function of the dynamic and static conditions of the motor vehicle;
- US2005/0179229 (Ridley) is limited to a single-condition logic based on the transmission-in-neutral position (neutral), with reactive behaviour;
- US7,644,794 (Honda) uses the stand exclusively as an input for the control of the transmission, without any teaching relating to the control of the stand itself;
- none of the documents suggests or renders obvious:
   ∘ the combined use of multiple parameters relating to the dynamic and static state of the motor vehicle;
   ∘ the replacement of the neutral condition (neutral) with equivalent conditions based on braking and **immobility;**
- Still less does it suggest or render obvious the refinements that provide for
   ∘ the use of an inclination limit correlated to the stabilizing or destabilizing behaviour of the actuators of the stand;
   ∘ a preventive control architecture with optional emergency mode.

It follows that the solution according to independent claim 1 of the present invention does not derive in an obvious manner from the combination of the cited documents and that, in the light of the informational content of these documents, it implies a redefinition of the technical problem and of the operating safety conditions and introduces a functional interaction between sensors, control logic and actuators that is not suggested in the state of the art.

From what is set forth above, it appears evident that the principle underlying the present invention consists in subordinating the activation of the stand to a preventive evaluation of safety conditions detected by means of sensors associated with the vehicle.

Unlike traditional systems in which the stand is actuatable directly in response to a command, the system according to the present invention introduces a preventive control that binds the activation of the stand to the operating conditions of the vehicle.

The system according to the present invention may be configured according to various embodiment variants that all fall within the scope of the same general concept. In particular, these variants may relate to:
- the sensors, which may be of a different type or further combined;
- the actuators, which may be hydraulic, electric or of another nature;
- the control circuit, which may be implemented by means of hardware, software or a combination thereof;
- the enabling conditions, which may be modified or adapted as a function of the characteristics of the vehicle.

Further refinements of the invention are the subject of the dependent claims.

The features described above and other features and advantages of the present invention will become more clearly apparent from the following description of some exemplary embodiments illustrated in the accompanying drawings, in which:
Figure 1 illustrates a high-level block diagram of an electro-hydraulically actuated stand and of the actuation system according to an exemplary embodiment of the present invention.
Figure 2 illustrates a schematic view of a motor vehicle provided with a system according to an embodiment of the present invention.
Figure 3 shows a schematic view of the lateral-inclination conditions of a motor vehicle in an inclination smaller than a maximum threshold value and in an inclination greater than said maximum threshold value.
Figure 4 shows a block diagram of an example of the control logic of the system according to the present invention.
Figure 5 shows a flow diagram of the process of enabling/disabling the stand.
Figure 6 schematically shows an exemplary embodiment of a command display of a system according to the present invention.

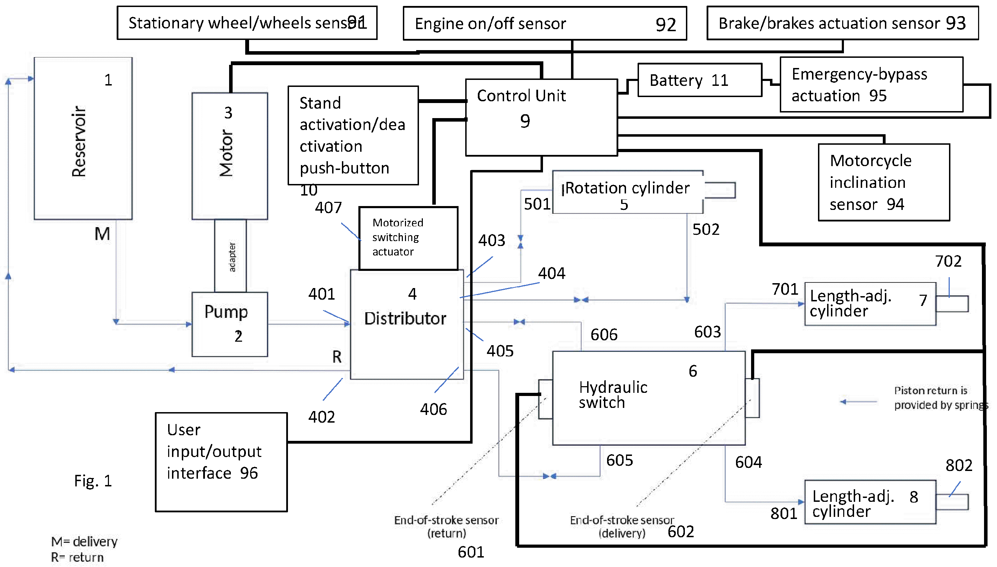

With reference to Figure 1, this shows a block diagram of an example of a motorized stand with an actuation system according to the present invention. The actuation system is of the hydraulic type, and the term hydraulic is also understood to mean the use of a pressure fluid consisting of oil or the like. The stand comprises a pair of legs that are spaced apart from each other in the direction of a transverse axis of the vehicle, that is, perpendicular to the vertical, longitudinal, central plane of the vehicle itself. Preferably the two legs are positioned symmetrically with respect to said vertical, longitudinal and central plane of the vehicle and are supported so as to oscillate around a horizontal axis transverse to the aforesaid plane, so as to be able to assume a position raised from the ground against the frame of the vehicle, for example substantially parallel to said ground, which position coincides with an inactive condition of the stand, and a position rotated downwards, that is, a position in which the longitudinal axis of said legs is oriented in a direction incident against the ground. This second position consists of an activation position of the stand and, in the present case, is an intermediate activation position, since the legs have a length variable between a condition of minimum length or maximum shortening and an extended condition in which their length is such that the ends of the legs rest against the ground at a predetermined point of incidence against it, which is defined by the orientation of the legs towards the ground in the lowered condition.

Although by vehicle may be meant any type of vehicle that requires a stand to be supported in a condition of non-use, the invention is directed above all to motor vehicles or to three-wheeled vehicles, so that the more general term vehicle contains and also refers to motor vehicles.

In the illustrated embodiment, the angular travel of lowering and raising of the legs is controlled by a rotation actuator cylinder, indicated by 5 in Figure 1, which acts on the pair of legs that is carried by a fastening base on the frame of the vehicle, to which it is pivoted so as to oscillate around said transverse axis.

The length adjustment of the legs between the positions of minimum length and of extension is obtained thanks to the fact that the legs themselves, or a part of said legs, are each constituted by an independent hydraulic length-adjustment cylinder, as indicated by 7 and 8 in Figure 1.

Starting from an inactive condition of the stand, a stand-activation command activates the supply of a pressure fluid to the rotation cylinder in the sense of a rotation of the legs of the stand from the aforesaid raised position to the aforesaid lowered position in a direction incident against the ground, while the legs themselves are in the condition of minimum length. Once a predetermined lowered end-of-stroke position of the legs has been reached, the supply of fluid to the rotation cylinder is interrupted and the rotation cylinder is isolated from the circuit, not allowing the reverse stroke of the rotation cylinder, which remains locked in the lowered condition of the legs, while the length-adjustment cylinders of the legs are connected to the hydraulic circuit and are supplied with the pressure fluid, allowing the lengthening of the legs until contact thereof with the ground is achieved and thus an end-of-stroke position. The inlets/outlets of the length-adjustment cylinders of the legs are supplied by means of a common chamber and therefore communicate with one another, allowing a differentiated lengthening of the two legs in correspondence with the profile of the ground surface, the supply of the pressure fluid thereto and the communication therebetween being blocked once contact against the ground has been reached. The length-adjustment cylinders thus remain locked in position.

In this condition the vehicle is stably supported by the stand; the hydraulic length-adjustment cylinders of the legs are isolated from the rest of the circuit, preventing them from performing the reverse stroke of shortening the legs towards the condition of minimum length.

The transition of the stand from the aforesaid active condition back to the inactive condition is controlled by a command member that initially reconnects the hydraulic length-adjustment cylinders of the legs to the hydraulic circuit, allowing the reverse stroke of said cylinders from the extended condition to the condition of minimum length of the legs. Once this condition has been reached, the system again isolates the hydraulic length-adjustment cylinders of the legs and reconnects the rotation cylinder to the circuit, allowing its actuation along the reverse stroke corresponding to the raising of the legs against the frame of the vehicle into the end-of-stroke rest position. Once this position has been reached, the system is deactivated awaiting a new activation command, interrupting the supply to the motor of the pump and isolating the hydraulic length-adjustment cylinders of the legs and the rotation cylinder from the circuit for the pressure fluid.

The actuation system according to the present example of Figure 1 is configured to carry out the various phases of activation and deactivation of the stand described above and is composed of a unit for generating a pressure fluid, comprising a reservoir 1 of the fluid to be supplied under pressure to said cylinders 5, 7, 8, and a pump 2 driven by a motor, preferably an electric one 3.

The delivery of the pump 2 and the return to the reservoir 1 are distributed to the rotation actuator cylinder 5 and to the hydraulic length-adjustment cylinders of the legs 7 and 8 by means of at least one distributor 4.

In the illustrated embodiment, the distributor 4 does not connect the delivery of the pump 2 and the return to the reservoir directly to the hydraulic length-adjustment cylinders of the legs, but rather such connection takes place by means of a hydraulic switch 6 consisting of a cylinder housing a piston and dividing the chamber of said cylinder into two end chambers, each connected or connectable respectively to the distributor 4 and to the hydraulic length-adjustment cylinders of the legs 7 and 8, and the function of which is furthermore to signal, by means of sensors 601, 602, the end-of-stroke positions of the piston in the respective end chamber, as will be described in greater detail hereinafter, and also to form a common chamber for supplying the pressure fluid to said length-adjustment cylinders of the legs, through which said cylinders communicate with one another.

The distributor connects the rotation cylinder 5 directly to the delivery of the pump 2 and to the return to the reservoir 1, which rotation cylinder is provided with end-of-stroke sensors that directly read the end-of-stroke positions of the rod of the cylinder and/or that read the angular end-of-stroke positions of lowering and raising of the pair of legs of the stand.

A control unit 9 comprises inputs for the command or commands of activation and deactivation of the stand, indicated by 10 and represented by way of non-limiting example by a push-button, for the end-of-stroke sensors 601 and 602 of the hydraulic switch 6 that serves the hydraulic length-adjustment cylinders 7 and 8 of the legs, the end-of-stroke sensors (not illustrated) of the rotation cylinder 5, and an input for the power-supply signal, for example, of a battery 11. The control unit 9 comprises outputs for the power-supply signal of the motor 3 of the pump and for a motorized switching actuator 407 that is part of the distributor and that is configured to vary the operating condition of the distributor as regards the connection or the interdiction of said connection of the delivery of the pump and of the return to the reservoir respectively and alternatively with the rotation cylinder 5 and the hydraulic switch 6 that serves the cylinders 7 and 8 for adjusting the length of the legs.

Furthermore, a program is loaded into the control unit 9 that comprises the instructions for controlling the actuation of the motor 3 and the switching steps of the switching actuator 407 in a manner synchronized with one another, for carrying out the phases of activation and deactivation of the stand as described above.

According to a further feature, one or more sensors for detecting safety conditions for the actuation of the stand may be connected to the control unit. A first embodiment provides that a sensor of the on/off condition of the engine of the vehicle is connected to the control unit 9. In the engine-off condition, the actuation of the stand is prevented by requiring that the engine be on. Said sensor is indicated by 92 in Figure 1 and has the purpose of ensuring that a sufficient quantity of electrical energy is always produced to ensure the operation of the actuation system.

Alternatively or in combination, a sensor for detecting the movement condition of the wheel, indicated by 91, may be connected to the control unit 9. In this case at least one wheel or some wheels may be provided with said sensor, which signals the wheel-stationary or wheel-moving condition to the control unit, said control unit being configured to prevent the actuation of the stand if at least one wheel is moving.

Similarly and, also in this case, alternatively or in combination with one or both of the aforesaid sensors, a sensor for the actuation of at least one brake of a wheel or of a certain number of the brakes of the vehicle, indicated by 93, may be connected to the control unit. Furthermore, 94 indicates at least one lateral-inclination sensor of the vehicle that measures the angle of inclination of the vehicle relative to the vertical orientation. It is also possible to provide at least one further sensor that measures the angle of inclination of the vehicle in the direction of its fore-and-aft longitudinal axis, that is, by analogy with watercraft, the so-called pitch angle. As will appear in greater detail from the following description, the control unit is configured to prevent the activation of the stand actuation system when the signal of each of said sensors does not fall within the scope of predetermined values. In particular, when at least one of the sensors indicates that the vehicle is moving from the measurement of the rotation of one or more wheels, the vehicle may potentially move because none of the brakes is active, the engine of the vehicle is not on, the vehicle has a lateral and/or fore-and-aft inclination greater than a respective predetermined maximum inclination angle. The enabling of the activation of the stand by means of the push-button 10 is instead activated when the control unit detects, thanks to the sensors, that all the aforesaid conditions, namely vehicle stationary, that is, wheels stationary, at least one brake actuated, engine on and inclination of the vehicle within the preset limits, are satisfied. All the aforesaid sensors relate to the detection of safety conditions for the activation of the stand, and the enabling of the activation is controlled by a logic of the "and" type.

The configuration of the control unit for carrying out said control functions is obtained, for example, by using a control unit that comprises a generic processor into which a program is loaded or loadable that encodes the aforesaid control logic.

95 indicates an emergency-activation push-button of the stand, which allows the stand to be actuated by means of the push-button 10 even under conditions in which it is impossible to start the engine, for example in the event of a failure or other malfunctions. Advantageously, this emergency-actuation member 95 is arranged in a position that is not directly accessible, such as for example under the saddle or in other positions that require a voluntary action to reach said member and avoid involuntary activations. In a simplified embodiment, said member closes a bypass circuit of the control unit that connects the operating units of the stand and at least part of the control system of said units to the battery, simulating, for example, the engine-on condition.

The control unit may be provided with at least one communication port, by cable or by a wireless communication system, with a user input and output interface, indicated cumulatively by the box 96, and by means of which the user can set the control system, for example by entering the data relating to the threshold value of the maximum lateral and/or fore-and-aft inclination or the thresholds of the signals for identifying the movement condition of the vehicle and/or other functional parameters that require a preventive setting of the system and of the stand itself.

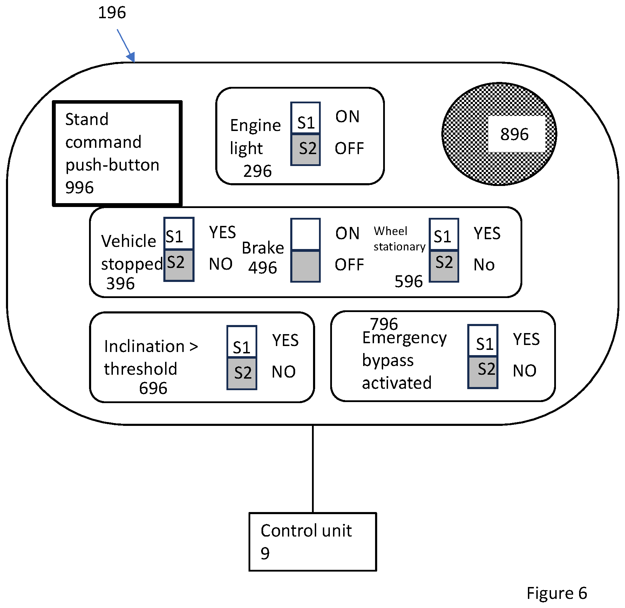

The output interface may be configured to allow the control unit to send acoustic, visual, for example luminous, signals and/or alphanumeric messages to a display, such as for example the one shown in Figure 6 and described in greater detail hereinafter.

According to an embodiment, the distributor 4 has at least one inlet 401 communicating with the delivery of the pump 2 and at least one outlet 402 connecting to the inlet of the return of the pressure fluid to the reservoir 1. The distributor 4 further has a first and a second inlet/outlet 403, 404 connecting respectively to a first and a second inlet/outlet 501, 502 of the rotation actuator cylinder 5, and a first and a second inlet/outlet 405, 406 connecting to a respective first and second inlet/outlet 605, 606 of the hydraulic switch 6.

In an exemplary embodiment, the distributor 4 comprises a diverter member that has a combination of two pairs of through ducts, which through ducts have, at their opposite ends, communication openings, one pair of ducts being provided with end openings positioned in such a way as to be able to be brought into coincidence and therefore communicating respectively with the inlet 401 of the distributor communicating with the delivery of the pump 2 and the outlet 402 of the distributor 4 connecting to the reservoir 1, and with the first and second inlet/outlet 403, 404 connecting respectively to the first and second inlet/outlet 501, 502 of the rotation cylinder 5, or vice versa, while the second of said two pairs of ducts has openings at its ends that are positioned so as to be able to be brought, with their openings, into coincidence and therefore communicating respectively with the inlet 401 of the distributor communicating with the delivery of the pump 2 and the outlet 402 of the distributor 4 connecting to the reservoir 1, and with the first and second inlet/outlet 405, 406 connecting the distributor 4 respectively to the first and second inlet/outlet 605, 606 of the hydraulic switch 6. The switching member may also be actuated to bring the openings of the ducts of all the pairs of ducts into a position of non-coincidence of any of said openings of said ducts with each of the inlet 401 connecting to the pump 2 and the outlet 402 connecting to the reservoir 1 and the first and second inlets/outlets 403, 404, 405, 406 connecting to the corresponding inlets/outlets 501, 502, 605, 606 of the rotation cylinder 5 and of the hydraulic switch 6, isolating from the rest of the circuit, and in particular from the delivery of the pump 2 and from the return to the reservoir 1, said rotation cylinder and the hydraulic switch 6 and, with it, the hydraulic cylinders 7 and 8 of adjustment of the length of the legs.

With reference to one of the embodiment variants described with reference to Figure 1 and providing at least one or two or all of the sensors for detecting the engine-on condition 92, the sensors for detecting the movement condition of the wheel or wheels 91 and the sensors 93 and 94 for detecting the actuation of at least one brake and at least the lateral inclination of the vehicle, the aforesaid commands of activation of the stand and of deactivation thereof are not carried out by the control unit 9 if the signals of all the aforesaid sensors indicate that at least one of the provided safety conditions is not satisfied, and therefore that the engine of the vehicle is on, and at least one wheel is stationary and at least one brake is actuated and that at least the lateral inclination of the vehicle and/or also the fore-and-aft inclination are below a predetermined and respective maximum inclination threshold.

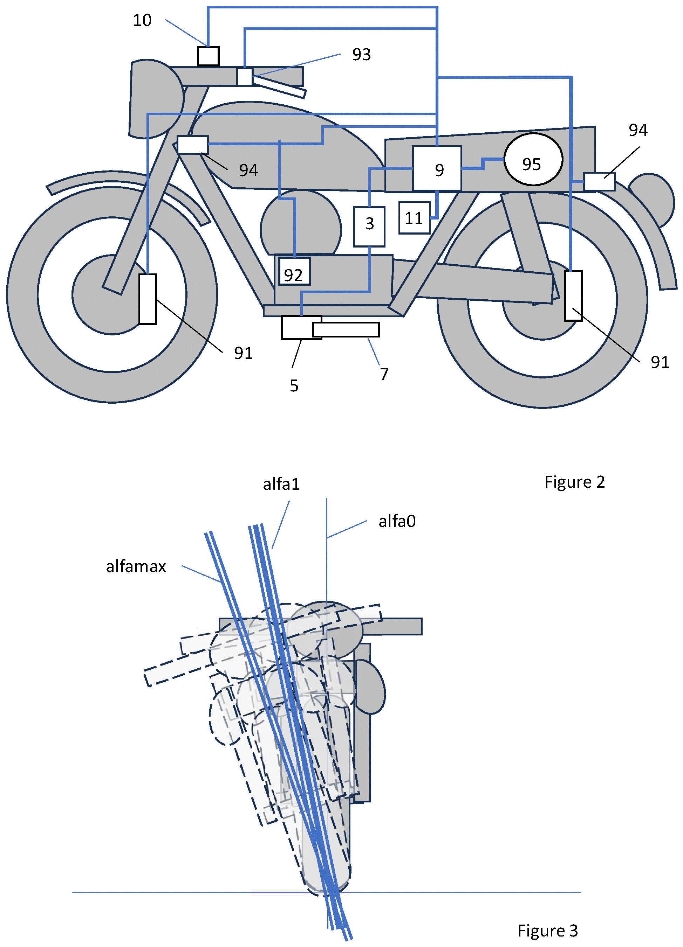

Figure 2 shows a schematic example of a system according to an embodiment of the present invention mounted on a motor vehicle. The sensors 91 to 94, the stand command push-button 10, the battery 11, the emergency-bypass activation push-button 95, the control unit 9, the motor of the hydraulic pump 3 and the rotation actuator of the legs of the stand 5, as well as the legs of the stand 7, are indicated in Figure 2 with the same reference numerals as Figure 1.

A wheel-rotation sensor 91 applied to each of the two wheels is provided, as well as two inclination sensors respectively in the front and rear region of the motor vehicle. However, this configuration is merely exemplary of the fact that more than one sensor for each of the provided sensor types may be coupled to the motor vehicle, the embodiment that has the minimum essential features being the one that provides at least one sensor of the engine on/off condition, at least one wheel-stationary sensor and at least one actuated-brake sensor.

As indicated in the claims and in the introductory part of the description, the presence of one or more inclination sensors may be optional, even though such a sensor is provided in the preferred and most complete embodiment of the present invention.

As Figure 3 shows, the inclination sensor or sensors are, in one embodiment, sensors of the lateral inclination of the motor vehicle relative to the vertical direction, indicated by the inclination angle "alfa0". The lateral-inclination angle indicated by "alfamax" represents the condition of maximum inclination allowed for the activation of the motorized stand. When the inclination is less than or equal to this angle "alfamax", such as for example the condition indicated by the inclination angle alfa1, the stand can be activated safely and effectively as regards the execution of dedicated lengthening strokes of the two legs that allow the motorcycle to be kept stably in equilibrium thereon. With inclination angles that exceed the value of "alfamax", the actuation of the stand is no longer able to ensure a stable support of the motorcycle and may even contribute to the further destabilization thereof.

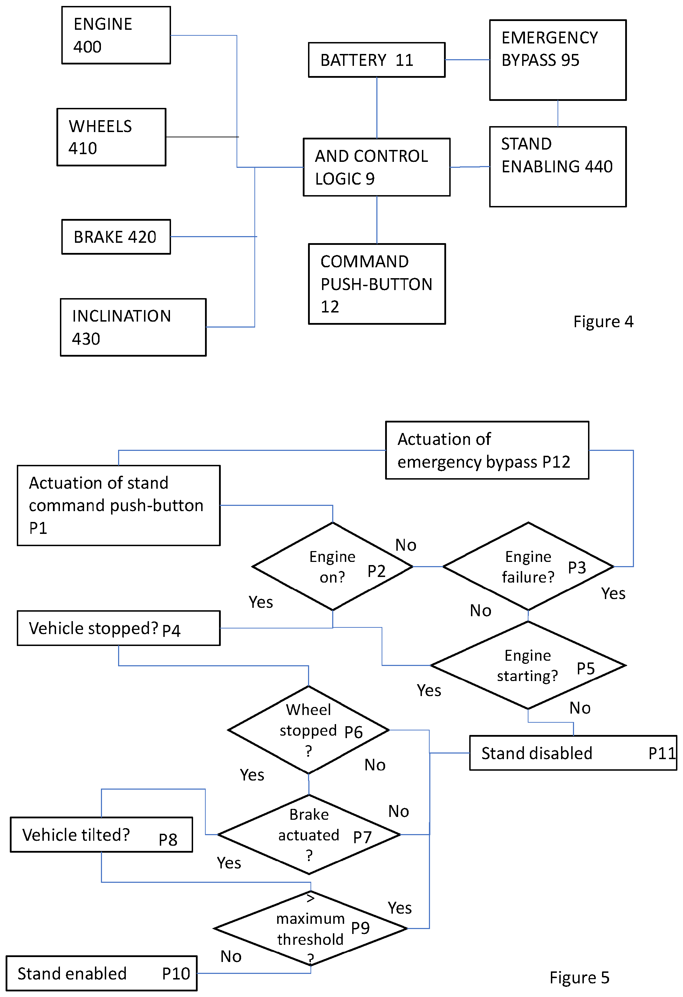

The block diagram of Figure 4 shows the logic of the system according to an embodiment of the present invention. The blocks 400, 410, 420 and 430 indicate the functional conditions that must be satisfied to allow an actuation of the stand and that, as already indicated above, concern the engine-on condition, the motorcycle-stationary condition detected from the condition of the wheel or wheels being stationary in combination with the condition of actuation of at least one brake, and, in the illustrated form, also the condition of inclination of the motor vehicle with an angle smaller than the predetermined maximum inclination angle indicated by "alfamax" in Figure 3.

As regards the inclination of the motor vehicle, the lateral inclination is mainly considered. However, in one embodiment, one or more fore-and-aft inclination sensors may be added to the motor vehicle, a further fore-and-aft inclination condition thus being considered, which must satisfy a fore-and-aft inclination value smaller than or at most equal to a maximum fore-and-aft inclination threshold to allow the activation of the stand.

In Figure 4, the box 430 represents all the possible variants, namely the condition of lateral inclination only or the combined condition of lateral inclination and fore-and-aft inclination, or also the fore-and-aft inclination only.

Figure 4 also shows the supply battery 11, the command push-button 10 and the emergency bypass 95, which act on the control logic 9, which is of the "AND" type.

As regards the inclination threshold values and the tolerance settings relating to the signals supplied by the sensors for defining whether or not the corresponding condition of the aforesaid conditions is satisfied, these parameters can be set by means of the man-machine input interface, as already described above with reference to Figure 1. As Figure 4 shows, the stand 440 is enabled to be actuated when all the conditions 400 to 430 are satisfied.

With reference to the engine on/off condition 400, a situation may occur in which the engine cannot be started, for example due to a failure thereof or because the fuel has run out. In this case, the AND logic would prevent the enabling of the stand 440. However, the emergency bypass 95 allows the AND logic 9 to be circumvented as regards the engine-starting condition and the control unit to be activated in such a way as to allow the enabling of the stand.

According to a preferred embodiment, the emergency-bypass activation member can configure the control unit in such a way that the control logic is carried out at least partially, that is, still considering the verification that the conditions 410 to 430 are satisfied.

In an embodiment variant of this embodiment, the actuation of the emergency-bypass member generates an engine-on signal that is substitutive of the one supplied by the corresponding sensor and that therefore simulates the engine-on condition 400 regardless of the actual condition of the engine. Thanks to this, the control unit can proceed to carry out the AND control logic without requiring the execution of alternative routines that are carried out in place of the main logic 9.

Figure 5 shows an example of the process steps of the AND control logic of the present invention and in particular of the system represented in Figure 4.

At step P1, the command push-button 10 of the stand is actuated. The control unit 9 runs the control-logic software and begins the verification of the enabling conditions of the stand. At the first step P2, the verification of whether the engine is on or off is carried out. If the engine is on, the process continues with step P4 of verifying whether the motor vehicle is stationary. Said verification involves two conditions. One condition relates to detecting whether one or both wheels of the vehicle are stationary, as indicated at step P6. If said verification is positive, the process proceeds to step P7, in which it is verified whether at least one of the brakes of the vehicle is actuated. If the verification of this condition is positive, the condition of inclination of the motor vehicle is also verified, as indicated at step P8. Said verification may comprise at least, or only, the measurement of the lateral-inclination angle and the comparison of said inclination angle with a predetermined maximum value for said inclination angle. In one embodiment, in combination with the verification of the lateral-inclination condition, it is possible to carry out a verification of the inclination condition in the fore-and-aft direction of the motorcycle. When the checks P9 have shown that the inclination or inclinations are compatible with the condition of an inclination angle smaller than the corresponding provided maximum threshold value, the stand P10 is actuated according to the operating modes provided by the actuation system, in this case hydraulic and in particular, but not necessarily, according to the embodiment of Figure 1.

In the event that, at step P2, the engine is off, the system verifies whether or not it is a failure condition, as indicated at step P3, and, if said failure condition is detected, the emergency-bypass actuation member is enabled, as indicated at step P12.

As regards these process steps, various alternatives can be provided.

In an embodiment in which the motor vehicle is provided with an electronic control unit with diagnostic functions, the failure condition can be detected automatically and signalled to the user. In this case the control unit 9 can automatically enable the emergency-bypass actuation member at step P12. In the event that a control unit with automatic engine-failure detection functions is not provided, the failure condition or impossibility of starting can be signalled by the user himself, for example by means of the input interface 96 shown in Figure 1. The aforesaid two variants can be provided alternatively or also in combination with one another. The provision of a step of manual signalling of the failure condition can be considered important even in the presence of a control unit that has diagnostic functions of the conditions of the engine, because it is possible that damage to the control unit may prevent the automatic generation of the failure signalling and that therefore this condition can only be signalled manually.

In a further embodiment, the emergency-bypass actuation member, and therefore the execution of step P12, may instead always be enabled, so that the steps of automatic or manual enabling may be omitted.

If a failure is not detected or not signalled and the engine is functioning, the user can proceed with the starting of the engine as indicated at step P5, and the stand-enabling process continues as described previously with steps P4 to P10 or P11. If the engine is not turned on and a failure is not detected or signalled, the stand remains disabled, as indicated at step P11.

As shown for each of the steps P6, P7 and P9, if one of these steps shows that the conditions of the motorcycle being stationary, namely wheel or wheels stationary or brake actuated, or inclination of the motorcycle greater than the corresponding maximum inclination value, are not satisfied, the process carries out step P11 of disabling the stand, of keeping the stand in the disabled condition.

The flow diagram of Figure 5 clearly shows the enabling logic of the and type, which allows the enabling of the stand only and solely if all the conditions at steps P2, P4, P6, P7, P8 and P9 are satisfied. Or, alternatively, if, only as regards the engine-on condition, this condition is due to an impossibility of starting the engine and step P2 is bypassed by means of the actuation of the emergency-bypass member at step P12.

As already described previously, the actuation of this member may completely exclude the control unit 9 and allow a direct supply to the stand, or may only simulate the engine-on condition at step P2 and allow the control unit to carry out all the steps relating to the verification of the existence of the enabling conditions of the stand as described above.

In one embodiment, the system according to the present invention may also comprise a machine-man interface unit 96 that may consist of a display comprising luminous and/or acoustic signalling units of the detected operating conditions.

In one embodiment the display 196 may have, for example, an indicator of the actuation condition of the stand command push-button. The indicator 996 may be luminous and comprise a multi-aspect lamp that can assume at least two colourings, one of which corresponds to stand enabled (for example green colour) and the other to the condition relating to stand disabled (for example red colour).

Alternatively or in combination, it is possible for the control unit 9 that manages the interface 196 to emit an acoustic signal or a voice message by means of a human-voice synthesizer through a loudspeaker 896.

Further fields of the display 196 may be present that signal in detail the reason why the stand has been enabled or has not been enabled, allowing the user to make corrections to the motor vehicle such as to satisfy the enabling conditions that are not satisfied or detected as not satisfied by the corresponding sensors. With reference to the previously described exemplary embodiments of the system, a zone of the display comprises luminous indicators 396, 496 and 596 relating to the motorcycle-stationary condition and to its components, wheel or wheels stationary and at least one brake actuated.

For each of said conditions it is possible to provide a multi-aspect light indicator that provides, for example, two different aspects relating to the colour of the emitted radiation and that are indicated by way of example by S1 and S2 in the display and that are actuated so as to assume one of the two aspects depending on whether or not the corresponding enabling conditions are satisfied. Similarly, a zone of the display 196 relates to the signalling of the engine on or off condition and is indicated by 296; a further zone of the display relates to whether the lateral and/or fore-and-aft inclination of the vehicle is greater than the respective preset maximum threshold and is indicated by 696. Finally, a zone of the display relates to the enabling and/or actuation of the emergency bypass and is indicated by 796. All these zones are associated with a multi-aspect light indicator like the one described for the zones 396 to 596 and in which the activation of one or the other aspect depends on whether the corresponding enabling condition of the stand is satisfied or is not satisfied. Similarly to what was described previously for the indicator 996 of actuation and enabling of the stand command, also in the case of the further light indicators, these may be provided in combination with the loudspeaker 896, the control unit 9 being configured to generate corresponding acoustic signals and/or voice messages.

In an embodiment not illustrated, the display may also comprise an area for displaying alphanumeric messages, in combination with or as an alternative to the multi-aspect light signalling and/or the acoustic or voice signalling.

Thanks to the display according to one or more of the variants described above, the user is able to know whether the stand is enabled for operation or what the reason is that prevents its actuation, and therefore to correct the conditions of the motorcycle so as to satisfy the provided enabling conditions of the stand. The system therefore not only allows a high level of safety to be obtained but also enables the user to know the impediments and to remedy them.

### List of Reference Numbers

| | |
|---|---|
| 1 | Reservoir |
| 2 | Pump |
| 3 | Pump motor |
| 4 | Distributor |
| 401 | Fluid inlet from pump delivery |
| 402 | Fluid outlet towards reservoir |
| 403 | Fluid inlet/outlet communicating with a first fluid inlet/outlet of the rotation cylinder |
| 404 | Fluid inlet/outlet communicating with a second fluid inlet/outlet of the rotation cylinder |
| 405 | Fluid inlet/outlet communicating with diverter |
| 406 | Fluid inlet/outlet communicating with diverter |
| 407 | Motorized switching actuator |
| 5 | Rotation actuator cylinder |
| 501 | First fluid inlet/outlet |
| 502 | Second fluid inlet/outlet |
| 6 | Hydraulic switch |
| 601 | End-of-stroke sensor |
| 602 | End-of-stroke sensor |
| 603 | Communication inlet/outlet of right-hand cylinder |
| 604 | Communication inlet/outlet of left-hand cylinder |
| 605 | First fluid inlet/outlet |
| 606 | Second fluid inlet/outlet |
| 7 | Hydraulic cylinder for length adjustment of right-hand leg |
| 701 | Fluid inlet/outlet |
| 702 | Rod |
| 8 | Hydraulic cylinder for length adjustment of left-hand leg |
| 801 | Fluid inlet/outlet |
| 802 | Rod |
| 9 | Control unit |
| 10 | Stand activation/deactivation command push-button |
| 11 | Battery |
| 91 | Stationary wheel/wheels sensor |
| 92 | Engine on/off sensor |
| 93 | Brake/brakes actuation sensor |
| 94 | Lateral and/or fore-and-aft inclination sensors |
| 95 | Emergency-bypass actuation member |
| 96 | User-to-control-unit input and control-unit-to-user output interfaces |
| Alfa1 | Lateral inclination angle smaller than the maximum inclination threshold angle |
| Alfamax | Lateral inclination angle corresponding to the maximum inclination threshold value |
| 400 | Engine |
| 410 | Wheels |
| 420 | Brake |
| 430 | Inclination |
| P1 | Actuation of stand command push-button |
| P2 | Engine on? |
| P3 | Engine failure? |
| P4 | Motorcycle stationary? |
| P5 | Engine starting? |
| P6 | Wheel stationary? |
| P7 | Brake actuated? |
| P8 | Motorcycle inclined? |
| P9 | Maximum threshold? |
| P10 | Stand enabled |
| P11 | Stand disabled |
| P12 | Actuation of emergency bypass |
| 196 | Display for command and visualization of stand controls |
| 296 | Engine indicator light |
| 396 | Motorcycle-stationary indicator |
| 496 | Active/inactive brake indicator |
| 596 | Stationary-wheel indicator |
| 696 | Inclination-greater-than-threshold-value indicator |
| 796 | Emergency-bypass activation/deactivation indicator light |
| 896 | Acoustic indicator |
| 996 | Stand command push-button actuation indicator |
| S1 | First aspect of light signal |
| S2 | Second aspect of light signal |

## Claims

1. System for actuating a motorized stand for a motor vehicle, the stand comprising at least one leg, preferably a pair of legs, mounted to oscillate relative to a frame of the vehicle between a raised rest position and a lowered support position, said legs being actuatable by means of at least one rotation actuator and at least one length-adjustment actuator, **characterized in that** it comprises:
• a control unit configured to control the rotation actuator and the length-adjustment actuator as a function of signals coming from a plurality of sensors associated with the operating state of the motor vehicle,
• a plurality of sensors comprising at least:
∘ a sensor of the engine activation condition of the vehicle,
∘ a sensor of movement of at least one wheel of the vehicle,
∘ a sensor of actuation of at least one brake,
wherein the control unit is configured to enable the actuation of the stand exclusively when the following conditions are simultaneously satisfied:
• the engine of the vehicle is active,
• the wheels of the vehicle are stationary,
• at least one brake is actuated,
and wherein, in the absence of all the aforesaid conditions, the control unit is configured to prevent the activation of the stand.

2. System for actuating a motorized stand for a motor vehicle according to claim 1, wherein said plurality of sensors further comprises a sensor for measuring the lateral inclination of the motor vehicle, and said control unit is configured to enable the actuation of the stand exclusively when, simultaneously with the conditions according to claim 1, the lateral-inclination control condition is also satisfied, relating to the fact that the lateral inclination of the vehicle measured by said lateral-inclination sensor is lower than a predetermined threshold value, and wherein the control unit is configured to prevent the activation of the stand even in the absence of said lateral-inclination control condition.

3. System according to claim 1 or 2, wherein the plurality of safety conditions is evaluated by the control unit by means of a combined logic such that the absence of one or more enabling signals entails the inhibition of the activation of the stand.

4. System according to one or more of the preceding claims, wherein the control unit carries out a preventive enabling logic aimed at ensuring the stability of the vehicle independently of a transmission-in-neutral condition.

5. System according to one or more of the preceding claims, wherein the system is configured for motor vehicles equipped with an automatic transmission, in particular a continuously variable transmission (CVT),
and wherein the safety condition for the actuation of the stand is defined independently of a transmission-in-neutral condition, being replaced by a combination of the conditions of:
• active braking, and
• absence of movement of the wheels.

6. System according to any one of the preceding claims, wherein the wheel-movement sensor is configured to detect also rotations smaller than a complete revolution of the wheel, so as to prevent the activation of the stand even in the presence of residual movements of the motor vehicle.

7. System according to any one of the preceding claims 2 to 6, wherein the lateral-inclination sensor is configured to detect an angle of inclination of the motor vehicle relative to a vertical reference direction,
and wherein the control unit is configured to prevent the actuation of the stand when said inclination angle exceeds a predetermined threshold value defined in such a way that the actuation of the stand is allowed only when the inclination of the motor vehicle falls within an operating range in which the extension of the legs achieves a stabilizing compensation,
the actuation of the stand being excluded outside such range, in which the extension of the legs produces a destabilizing effect.

8. System according to any one of the preceding claims, wherein the control unit is configured to implement an AND-type logic among all the safety conditions, in such a way that the stand is actuatable only in the simultaneous presence of all the conditions, and wherein the control unit is configured to prevent any automatic movement of the stand in the absence of an active command by the user.

9. System according to any one of the preceding claims, **characterized in that** it further comprises an emergency switch configured to:
• bypass the control unit,
• connect the actuators of the stand directly to a power-supply source of the vehicle,
allowing the actuation of the stand even in the absence of the aforesaid enabling conditions.

10. System according to claim 9, wherein the emergency mode allows the actuation of the stand even with the engine off, in particular in the event of a failure of the motor vehicle.

11. System according to any one of the preceding claims, wherein the control unit is configured to keep the stand in an inactive or non-actuatable configuration when any one of the safety conditions is not satisfied.

12. System according to any one of the preceding claims, wherein the actuators of the stand are hydraulic actuators supplied by a circuit comprising a pump, a reservoir and a distributor, and wherein the control unit is configured to selectively control the hydraulic circuit as a function of the enabling conditions.

13. System according to any one of the preceding claims, **characterized in that** it comprises a display device configured to provide the user with an indication relating to the state of enabling or prevention of the actuation of the stand as a function of the safety conditions detected by the sensors, wherein the display device is configured to signal at least the exceeding of the threshold value of the lateral inclination of the motor vehicle, so as to allow the user to modify the operating conditions of the motor vehicle and return them within a range that allows the activation of the stand.

14. System according to claim 13, wherein the display device is configured to selectively indicate which of the safety conditions is not satisfied, among which at least:
• operating state of the engine,
• movement of the wheels,
• actuation state of the brake,
• lateral inclination of the motor vehicle.
